Europäisches Patentamt

European Patent Office

Office européen des brevets

(11) Veröffentlichungsnummer: **0 097 943**

**A1**

# (12) EUROPÄISCHE PATENTANMELDUNG

(21) Anmeldenummer: 83106243.5

(22) Anmeldetag: 27.06.83

(51) Int. Cl.³: **A 01 D 35/264**
**A 01 D 55/18**

(30) Priorität: 29.06.82 DE 3224170

(43) Veröffentlichungstag der Anmeldung:
11.01.84 Patentblatt 84/2

(84) Benannte Vertragsstaaten:
FR GB NL

(71) Anmelder: Friedrich Mörtl Schleppergerätebau GmbH
& Co. KG
Kesslerstrasse 2
D-8780 Gemünden(DE)

(72) Erfinder: Grenzebach, Hans
Spessartweg 29
D-8780 Gemünden(DE)

(72) Erfinder: Mörtl, Friedrich, Dipl.-Ing.
Am Neuberg 12
D-8780 Gemünden(DE)

(72) Erfinder: Grenzebach, Roland
Am Neuberg 11
D-8780 Gemünden(DE)

(74) Vertreter: Bibrach, Rudolf, Dipl.-Ing. et al,
Pütterweg 6
D-3400 Göttingen(DE)

(54) Freischneidendes Mähwerk.

(57) Ein Tellermäher mit mehreren Tellern ist dadurch gekennzeichnet, daß mindestens zwei Teller mit Förderorganen versehen sind und in eine Richtung drehen, und daß der nächste benachbarte Teller ohne Förderorgan entgegengesetzt dreht.

Fig.2

EP 0 097 943 A1

COMPLETE DOCUMENT

Croydon Printing Company Ltd.

Die Erfindung betrifft ein freischneidendes, an einem
Fahrzeug, wie Schlepper od.gl. anzubringendes Mähwerk
mit mehreren auf einem Messerträger nebeneinander angeordneten, um senkrechte Achsen rotierenden Messerscheiben.

Bei derartigen Mähwerken bestehen Schwierigkeiten das
gemähte Gut quer zur Arbeitsrichtung des Mähwerkes zu
fördern und in einem schmalen Schwad abzulegen. Wenn
bei dichtem Futterbestand die Menge des zu fördernden
Gutes zunimmt, ist die Schnittsauberkeit beeinträchtigt.
Dies gilt insbesondere bei Messerscheiben ohne ein
Förderorgan für das Gut. Dem konnte auch durch die
unterschiedlichsten Formen der Förderorgane nicht
abgeholfen werden. Diese hatten vielmehr einen weniger
schnellen Querfluss und ein Stauen des Gutes an den
Förderorganen zur Folge. Auch mit Prallblechen oder
Leitblechen zwischen den einzelnen Messerscheiben war
kein besserer Erfolg zu erreichen.

Aufgabe der Erfindung ist es, diesem Mangel abzuhelfen
und ein freischneidendes Mähwerk zu schaffen, mit welchem ein guter Querfluss des Mähgutes und dessen Ablage
in einem schmalen Schwad gegeben ist und Stauungen im
Mähgut vermieden sind.

Dies wird erfindungsgemäss dadurch erreicht, dass bei
einem Mähwerk mit mehreren auf einem Messerträger
nebeneinander angeordneten, um senkrechte Achsen rotierenden Messerscheiben mindestens zwei benachbarte
Messerscheiben mit Förderorganen für das Mähgut versehen sind und gleichsinnig umlaufen und die in der
Gutförderrichtung folgende Messerscheibe entgegengesetzt dreht.

Der Erfindungsgedanke lässt die verschiedensten Ausführungsmöglichkeiten zu. Diese sind in der anhängenden Zeichnung wiedergegeben und in der folgenden Beschreibung erläutert. Es zeigen:


Fig. 1 bis 3    verschiedene Typen von an einem Schlepper
                angebauten Mähwerken,

Fig. 4          eine schematische Darstellung der Messerscheibenanordnung eines Mähwerkes
                und

Fig. 5          eine schematische Darstellung einer einzelnen Messerscheibe mit Förderorgan.

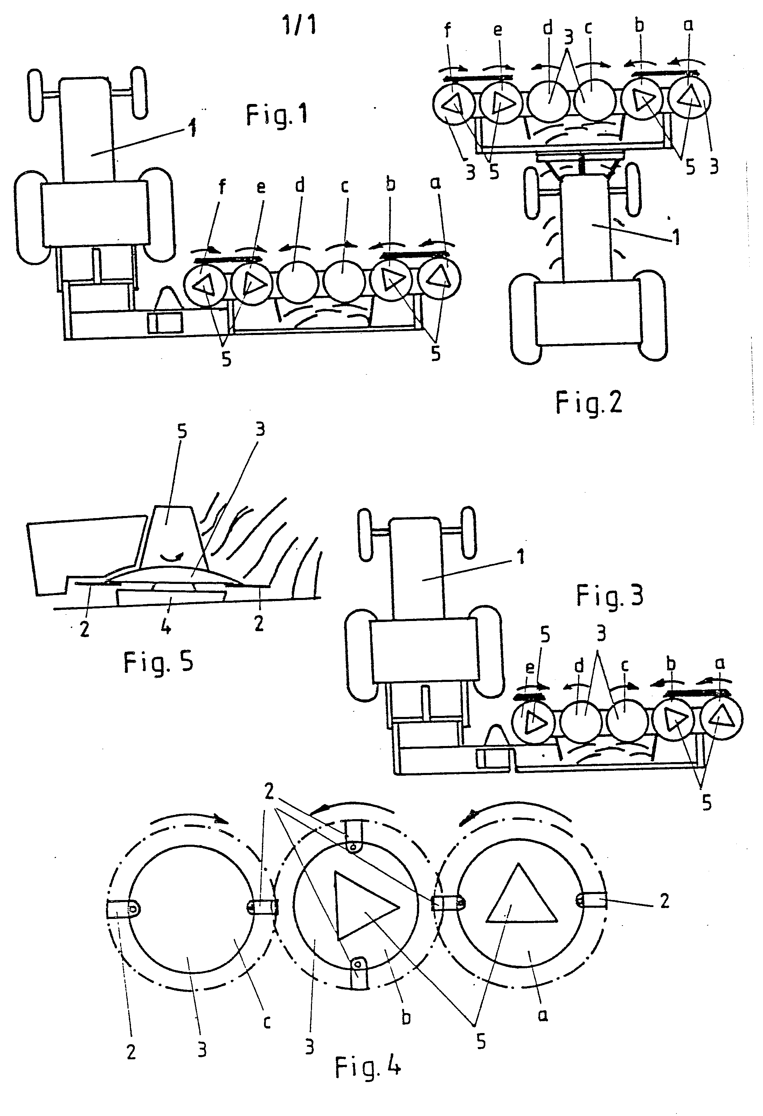

Gemäss Fig. 1 bis 3 ist das Mähwerk an einem Schlepper 1
im Heckanbau vorgesehen. In Fig. 2 im Frontanbau. Es sind
jeweils mehrere mit Messern 2 versehene Messerscheiben 3
auf einem gemeinsamen Mähbalken 4 nebeneinander angeordnet.

Die einzelnen Messerscheiben 3 sind der besseren Erläuterung
halber mit dem Buchstaben a bis f bezeichnet. Jeweils die
aussenliegenden Messerscheiben a und b laufen gleichsinnig
um und sind mit einem Förderorgan für die Querförderung
des Mähgutes versehen. Die nun folgende Messerscheibe c
läuft in entgegengesetzter Drehrichtung um. In entsprechender Weise läuft das innenliegende Messerscheibenpaar e und f
bei der Anordnung gemäss Fig. 1 und 3 gemeinsam in entgegengesetzter Drehrichtung um zur Drehrichtung der Messerscheibe d.

- 4 -

Bei der Ausführung gemäss Fig. 2 gilt Entsprechendes.

Wesentlich ist, dass die einzelnen Messerscheiben gegenläufig umlaufen. Dies bewirkt, dass das querfliessende
Mähgut von dem jeweils gegenläufigen Teller gebremst
und nach hinten geworfen wird.

Aufgrund der erfindungsgemässen Anordnung und Ausführung
der Messerscheiben ist es möglich, ohne Beeinträchtigung
der Schnittsauberkeit eine hohe Mähleistung selbst bei
schwerem und nassem Futter zu erreichen.

# BIBRACH & REHBERG     0097943

ANWALTSSOZIETÄT

BIBRACH & REHBERG, POSTFACH 1453, D-3400 GÖTTINGEN

PATENTANWALT DIPL.-ING. RUDOLF BIBRACH
·PATENTANWALT DIPL.-ING. ELMAR REHBERG

RECHTSANWÄLTIN MICHAELA BIBRACH-BRANDIS

TELEFON: (0551) 45034/35
TELEX: 96616 bipat d
POSTSCHECKKONTO: HANNOVER
(BLZ 25010030) NR. 115763-301

BANKKONTEN:     DEUTSCHE BANK AG GÖTTINGEN
(BLZ 26070072) NR. 01/85900
COMMERZBANK GÖTTINGEN
(BLZ 26040030) NR. 6425712

| IHR ZEICHEN YOUR REF. | IHR SCHREIBEN VOM YOUR LETTER | UNSER ZEICHEN OUR REF. | D-3400 GÖTTINGEN, PÜTTERWEG 6 |
|---|---|---|---|
| | | 11.461a/B3 | 26.6.1983 |

Friedrich Mörtl Schleppergerätebau GmbH & Co. KG
Kesslerstrasse 2, 8780 Gemünden

Freischneidendes Mähwerk

P a t e n t a n s p r u c h :

Freischneidendes, an einem Fahrzeug, wie Schlepper od.dgl. anzubringendes Mähwerk mit mehreren auf einem Messerträger nebeneinander angeordneten, um senkrechte Achsen rotierenden Messerscheiben, dadurch gekennzeichnet, dass mindestens zwei benachbarte Messerscheiben mit Förderorganen für das Mähgut versehen sind und gleichsinnig umlaufen und die in der Gutförderrichtung folgende Messerscheibe entgegengesetzt dreht.

0097943

1/1

Fig. 1

Fig. 2

Fig. 3

Fig. 4

Fig. 5

0097943

**Europäisches Patentamt**

## EUROPÄISCHER RECHERCHENBERICHT

Nummer der Anmeldung

| EINSCHLÄGIGE DOKUMENTE | | | EP 83106243.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| P,X | DE - A1 - 3 120 209 (MÖRTL) <br> * Fig. A,B * <br> -- | 1 | A 01 D 35/264 <br> A 01 D 55/18 |
| P,X | DE - A1 - 3 119 086 (MÖRTL) <br> * Fig. A,B * <br> -- | 1 | |
| X | DE - A - 1 944 318 (WIENEKE) <br> * Seite 2, Zeilen 1-4; Fig. 5 * <br> -- | 1 | |
| X | DE - A1 - 2 800 500 (MASSEY-FERGU-SON) <br> * Seite 20, Zeile 21 - Seite 21, Zeile 6; Fig. 8-11 * <br> -- | 1 | |
| Y | DE - A - 1 507 272 (W. KEMPNER KG) <br> * Fig. 1 * <br> -- | 1 | **RECHERCHIERTE SACHGEBIETE (Int. Cl. ³)** <br><br> A 01 D 35/00 |
| Y | DE - A - 1 582 312 (MASCHINENFABRIK FAHR AG) <br> * Fig. 1 * <br> -- | 1 | A 01 D 43/00 <br> A 01 D 55/00 |
| A | DE - A - 1 925 708 (KUHN FRÈRES) <br> * Fig. 4-6 * <br> ---- | 1 | |

Der vorliegende Recherchenbericht wurde für alle Patentansprüche erstellt.

| Recherchenort | Abschlußdatum der Recherche | Prüfer |
|---|---|---|
| WIEN | 13-09-1983 | LANGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82